# EUROPÄISCHE PATENTSCHRIFT

(11) **EP 1 714 866 B1**
(45) Veröffentlichungstag und Bekanntmachung des Hinweises auf die Patenterteilung: **18.03.2009**
(21) Anmeldenummer: 06006829.3
(22) Anmeldetag: 31.03.2006
(51) Int. Cl.: B64C 1/00, B64C 3/18

(54) **Als Träger in Schalenbauweise ausgebildeter Tragflügel eines Flugzeugs**
Monocoque wing structure
Aile monocoque

(30) Priorität: 21.04.2005 DE 102005018428
(43) Veröffentlichungstag der Anmeldung: 25.10.2006
(73) Patentinhaber: Deutsches Zentrum für Luft- und Raumfahrt e.V., 51147 Köln (DE)
(72) Erfinder: Klinge, Falk, Dr.-Ing., 37079 Göttingen (DE)
(74) Vertreter: Rehberg Hüppe + Partner

(56) Entgegenhaltungen:
- EP-A- 0 941 922
- DE-A1- 2 142 562
- DE-C- 952 594
- DE-C1- 4 329 744
- DE-C1- 19 709 917
- US-A- 3 246 394
- US-A- 4 538 780
- US-A- 4 725 021

## Beschreibung

Die Erfindung betrifft einen Träger in Schalenbauweise mit den Merkmalen des Oberbegriffs des Patentanspruchs 1 zur Ausbildung eines Tragflügels eines Flugzeugs.

### STAND DER TECHNIK

Vereinfacht dargestellt bestimmt sich die nominelle lokale Biegesteifigkeit eines Trägers durch ein Querschnittintegral eines Produkts aus den Querschnittsflächen der tragenden Strukturelemente, ihren spezifischen Druck- bzw. Zugsteifigkeiten und ihrem Abstand zu der neutralen Faser des Trägers. Eine Gewichtsreduktion lässt sich daher grundsätzlich durch abnehmende Materialstärken bei einen größeren Abstand der tragenden Strukturelemente von der neutralen Faser und/oder bei festeren Materialien der tragenden Strukturelemente erzielen. Bei dieser Art der Gewichtsreduktion tritt jedoch relativ schnell das Problem des Beulens und Knickens in dem auf Druck belasteten Teil des Trägers auf. Durch das Knicken verringert sich der Abstand der tragenden Strukturelemente von der neutralen Faser, wodurch sich der Knickvorgang beschleunigt.

Im Leichtbau werden häufig Träger in Schalenbauweise eingesetzt. Bei diesen ist die Außenhaut ein tragendes Strukturelement, welches mit Zug-, Druck- und Scherspannungen belastet wird. Eine ebene oder nur leicht gebogene Platte knickt und beult schon bei geringen Spannungen ein, die weit unter ihrer Materialfestigkeit liegen. Diesem Problem kann durch Spanten und Stringer entgegengewirkt werden, d. h. durch quer zu der Haupterstreckungsrichtung und in der Haupterstreckungsrichtung des Trägers verlaufende Strukturelemente zur Versteifungen der Platte. In dem Maß, wie das Knicken und Beulen durch die Spanten und Stringer vermieden wird, kann die Materialausnutzung der Außenhaut gesteigert werden, obwohl diese bei den bekannten Schalenbauweisen gering bleibt.

Die Tragflügel eines Flugzeugs sind großen Belastungen sowohl während des Flugs als auch bei der Flugzeugbewegung am Boden ausgesetzt. Aerodynamisch bedingt weist ein Tragflügel eine geringe Höhe auf und benötigt deshalb vergleichsweise große Materialstärken, um die um horizontal und vertikal verlaufende Achsen auftretenden Biege- und Torsionsmomente aufnehmen zu können, ohne das Knick- und Beulprobleme in Bezug auf seine Außenhaut auftreten. Besondere Beachtung verlangt dabei die Dauerfestigkeit der Struktur, da die Lastwechselzahl bei einem Tragflügel eines Flugzeugs jenseits von einer Million liegt. Diese führt in der Praxis bekannter Tragflügel mit einer Sicherheit der Außenhaut gegenüber Beulen und Knicken dazu, dass die Lastbeanspruchung der Außenhaut in Richtung ihrer Haupterstreckungen weit unterhalb der Dauerfestigkeitsgrenze der Außenhaut liegt. Mit anderen Worten sind die Werkstoffe der Außenhaut, bei denen es sich häufig um Leichtmetalle handelt, nicht sinnvoll ausgenutzt. Der Einsatz von hochfesten Werkstoffen, wie beispielsweise Faserverbundwerkstoffe, ist für die Außenhaut von Tragflügeln in bekannten Schalenbauweisen aus Gewichtsgründen kaum lohnend.

Bei einer üblichen Schalenbauweise eines Tragflügels stützen sich die Spanten starr an Holmen ab, und die Holme und Spanten geben der Außenhaut des Tragflügels, bei der es sich um eine Schalenkonstruktion, häufig aus Leichtmetallblechen handelt, nicht nur die aerodynamische Form, sondern sorgen auch für einen wesentlichen Teil der Beul- und Knicksteifigkeit der Struktur. Die Außenhaut des Tragflügels wird dabei nur lokal auf Zug beansprucht, ebenso wie eine lokale Beanspruchung der Außenhaut in über die neutrale Faser gegenüberliegenden Bereichen auf Druck erfolgt.

Das was hier speziell in Bezug auf einen Tragflügel eines Flugzeugs ausgeführt wird, gilt auch für andere aerodynamische Bauteile eines Flugzeugs, wie beispielsweise Ruder, Leitwerke, Klappen oder dgl., aber auch beispielsweise in Bezug auf den Rumpf eines Flugzeugs. Überall tritt das Problem vergleichsweise großer Biegemomente auf, die durch vergleichsweise dünne Werkstoffe mit großem Abstand von der neutralen Faser aufgenommen werden, was mit der grundsätzlichen Gefahr des Beulens oder Knickens der Außenhaut verbunden ist. Dies gilt im Übrigen nicht nur für den Bereich der Luftfahrzeuge, sondern beispielsweise auch für den Bereich der Wasserfahrzeuge, bei denen die Außenhaut einer Struktur von Wasser umströmt wird, und auch für weitere Bereiche in denen Träger in Schalenbauweise eingesetzt werden. Ein besonderer Anwendungsbereich der vorliegenden Erfindung sind jedoch Luftfahrzeuge, bei denen spezielle Anforderungen an den Leichtbau gestellt werden. Gewicht ist bei Flugzeugen in doppelter Hinsicht von Bedeutung. So müssen die Tragflügel eines Flugzeugs mit ihrem zunehmenden Gewicht stabiler ausgeführt werden, um ihr eigenes Gewicht tragen zu können. Sie werden dadurch noch schwerer, was das Gesamtgewicht des Flugzeugs erhöht. Damit wird eine zusätzliche Tragfläche der Tragflügel erforderlich. Hierdurch wächst wiederum das Gewicht der Tragflügel. Zudem bedeutet eine Zunahme der Tragfläche der Tragflügel auch einen erhöhten aerodynamischen Widerstand des Flugzeugs, was bei vorgegebener Reichweite zu einer weiteren Zunahme des Gewichts in Form eines höheren erforderlichen Treibstoffvorrats führt.

Bei Spannbetonkonstruktionen, die beispielsweise im Brückenbau verwendet werden, wird eine Konstruktion aus Beton durch innen liegende Stahlbänder auf Druck verspannt. Beton kann große Druckkräfte, aber nur geringe Zugkräfte aufnehmen. Durch den auf Druck verspannten Beton wird die Knicksteifigkeit von Spannbetonkonstruktion erheblich erhöht, indem Zugspannungen auch in der zu streckenden Faser verhindert werden.

Auf dem Gebiet des Flugzeugbaus sind in früherer Zeit auch verspannte Strukturen verwendet worden. Hierbei wurden tragende Strukturelemente von umströmten Bauteilen durch Spanndrähte, über Spantürme und dgl. gegeneinander verspannt. Die Außenhaut der Bauteile ist bei diesen Strukturen nicht auf Zug belastet worden. Dabei ist zu bedenken, dass es sich bei dieser Außenhaut in aller Regel um biegeweiches Bahnenmaterial gehandelt hat, das keine nennenswerte Stabilität gegen Beulen oder Knicken aufwies.

Ein Träger in Schalenbauweise mit den Merkmalen des Oberbegriffs des Patentanspruchs 1 ist aus der DE 952 594 zur Ausbildung des Rumpfs eines Flugzeugs bekannt. Hier sind mehrere über den Umfang der Schale verteilte Druckstäbe, die gegen Ausknicken in Spanten geführt sind, im Bereich ihrer äußeren Enden direkt mit der Außenhaut verbunden, wobei die Außenhaut in den Verbindungsbereichen, die zwischen den Spanten liegen, extra ausgesteift sein kann. Die Verbindungen zwischen den Stäben und der Außenhaut ist damit auf linienförmige Bereiche längs der Stäbe beschränkt. Eine gleichmäßige Belastung der Außenhaut über ihren Gesamtumfang erfolgt nicht.

Die US-A-3 246 394 offenbart einen Raketentank mit vorgespannter Seitenwand. Bei dem dadurch gebildeten Träger in Schalenbauweise sind die Seitenwand und den Querschnitt der Seitenwand senkrecht zu einer Hauptachse des Tanks aussteifende und in der Hauptachse des Tanks voneinander beabstandete Spanten sowie ein sich auf der Hauptachse des Tanks erstreckendes Strukturelement vorgesehen, mit dem die Seitenwand längs der Hauptachse des Tanks unter Zugvorspannung gesetzt ist. Alle Spanten sind fest mit der Seitenwand verbunden und das auf der Hauptachse des Tanks verlaufende Strukturelement überträgt die Zugvorspannung über einen fest mit der Seitenwand verbundenen Endspant auf die Seitenwand.

### AUFGABE DER ERFINDUNG

Der Erfindung liegt die Aufgabe zugrunde, einen Träger in Schalenbauweise zur Ausbildung eines Tragflügels eines Flugzeugs aufzuzeigen, der die eingesetzten Werkstoffe bezüglich ihrer Belastungsfähigkeit deutlich besser ausnutzt, so dass der Träger bei gleicher Funktionalität, d. h. mindestens gleicher Sicherheit gegen Beulen und Knicken, deutlich leichter ausgebildet werden kann.

### LÖSUNG

Diese Aufgabe wird erfindungsgemäß durch einen Träger in Schalenbauweise mit den Merkmalen des Patentanspruchs 1 gelöst. Bevorzugte Ausführungsformen des neuen Trägers sind in den Unteransprüchen 2 bis 4 definiert.

### BESCHREIBUNG DER ERFINDUNG

Bei dem neuen Träger in Schalenbauweise steht die Außenhaut längs der Haupterstreckungsrichtung des Trägers unter einer Zugvorspannung. Diese Zugvorspannung wird über ein längs der Haupterstreckungsrichtung des Trägers verlaufendes Strukturelement abgestützt. Indem Zugspannungen in der Außenhaut herrschen, können hier keine zum Beulen oder Knicken führenden Druckbelastungen auftreten. Durch die Zugvorspannung auf die Außenhaut wird die Außenhaut in einer Richtung belastet, in der die zulässige Belastung der eingesetzten Werkstoffe bislang nur zu einem geringen Prozentsatz von typischerweise 30 % ausgenutzt wurde. D. h. die Außenhaut muss grundsätzlich nicht verstärkt werden, damit sie unter die Zugvorspannung gesetzt werden kann. Die Vorteile des neuen Trägers werden sich jedoch naturgemäß nur dann vollständig ausnutzen lassen, wenn die Außenhaut auf die Zugbelastung speziell abgestimmt wird. Die Zugvorspannung führt jedoch in jedem Fall dazu, dass sich die Steifigkeit der Leichtbaustruktur gegenüber Beulen und Knicken deutlich erhöht. Bei gleichem Gewicht weist die Außenhaut damit eine um ein Vielfaches erhöhte Steifigkeit auf. Die Erhöhung der Steifigkeit gegenüber Beulen und Knicken kann so groß sein, dass auf den Einsatz von Holmen im Wesentlichen verzichtet werden kann, das Knicken und Beulen also im Wesentlichen ausschließlich durch die auf Zug vorgespannte Außenhaut verhindert wird. Es ist auch möglich, die Materialstärke der Außenhaut zu reduzieren, um mit geringerem Gewicht dieselbe Steifigkeit der Außenhaut gegenüber Beulen und Knicken zu realisieren. Überschlägige Berechnungen haben ergeben, dass die Gewichtseinsparungen bei der Rohkonstruktion von Tragflügeln oder auch dem Rumpf eines Flugzeugs bis zu 60 % betragen können. Entsprechend der Gewichtseinsparung kann die Tragfläche der Tragflügel verkleinert, was zu einer Einsparung bei dem aerodynamischen Widerstand führt, oder die Zuladung des Flugzeugs erhöht werden.

Bei dem neuen Träger wird die Zugvorspannung über einen fest mit der Außenhaut verbundenen Spant, beispielsweise einem Endspant, auf die Außenhaut übertragen. Dieser Spant stützt sich mit der Gegenkraft zu der Zugvorspannung an den längs der Haupterstreckungsrichtung des Trägers verlaufenden Strukturelementen ab. Über den mit der Außenhaut verbundenen Spant wird die Zugvorspannung gleichmäßig über den Umfang der Außenhaut auf die Außenhaut übertragen.

Konkret kann sich die neue Leichtbaustruktur dadurch auszeichnen, dass die Beiträge aller längs der Haupterstreckungsrichtung des Trägers verlaufenden Strukturelemente zur Gesamtbiegesteifigkeit des Trägers zusammen kleiner sind als der Beitrag der auf Zug vorgespannten Außenhaut. Dies ist aber kein zwingendes Merkmal der vorliegenden Erfindung. Es werden allein dadurch Vorteile erzielt, dass die Beul- und Knicksteifigkeit der Außenhaut durch ihre Zugvorspannung deutlich erhöht wird.

Um die Zugvorspannung auf die Außenhaut des Trägers aufzubringen, sind die mindestens zwei in der Haupterstreckungsrichtung des Trägers verlaufenden Strukturelement vorgesehen. Die Spante des Trägers, die der Außenhaut des Trägers ihre Form verleihen, sind auf allen längs der Haupterstreckungsrichtung des Trägers verlaufenden Strukturelementen längsverschieblich geführt, damit diese Strukturelemente die Zugvorspannung der Außenhaut über ihre gesamte Länge in der Haupterstreckungsrichtung des Trägers gleichmäßig abstützen können. Quer zu der Haupterstreckungsrichtung des Trägers können sich die Spanten an den längs der Haupterstreckungsrichtung des Trägers verlaufenden Strukturelementen abstützen, um diese auch zur Erhöhung der Biegesteifigkeit der Leichtbaustruktur auszunutzen. Die längsverschiebliche Führung der Spanten der neuen Leichtbaustruktur auf den längs der Haupterstreckungsrichtung des Trägers verlaufenden Strukturelementen ist nur in Bezug auf solche längs der Haupterstreckungsrichtung des Trägers verlaufende Strukturelemente wichtig, die sich über die wesentliche Länge des Trägers erstrecken, über die die Zugvorspannung auf die Außenhaut des Trägers aufgebracht wird. Nur solche Strukturelemente werden hier näher betrachtet. Generell ist es aber vorteilhaft, wenn die Spanten in der Haupterstreckungsrichtung des Trägers bei der neuen Leichtbaustruktur nicht starr miteinander verbunden sind, um eine gleichmäßige Zugvorspannung über die betrachteten Bereiche in der Haupterstreckungsrichtung des Trägers aufbringen zu können.

Die Zugvorspannung auf die Außenhaut und entsprechend die Außenhaut selbst können bei dem neuen Träger in unterschiedlichen Bereichen längs seiner Haupterstreckungsrichtung auch unterschiedlich dimensioniert bzw. ausgebildet werden, um unterschiedlichen Belastungen in diesen Bereichen Rechnung zu tragen. Wenn als Träger der Rumpf eines Flugzeugs betrachtet wird, können beispielsweise die Zugvorspannung auf die Außenhaut und entsprechend die Wandstärke der Außenhaut in dem Bereich erhöht sein, in dem die Tragflügel an den Rumpf angesetzt sind und in dem der Rumpf besonderen Biegebelastungen ausgesetzt ist.

Die Zugvorspannung wirdüber einen fest mit der Außenhaut verbundenen Endspant auf die Außenhaut übertragen. Dieser stützt sich mit der Gegenkraft zu der Zugvorspannung an den längs der Haupterstreckungsrichtung des Trägers verlaufenden Strukturelementen ab.

Um den Verlauf der Außenhaut und damit beispielsweise ihre aerodynamische Form vollständig zu definieren, sind alle Spanten bei der neuen Leichtbaustruktur fest mit der Außenhaut verbunden.

Um eine möglichst reine Druckbelastung auf die längs der Haupterstreckungsrichtung des Trägers verlaufenden Strukturelemente sicherzustellen, sind hiervon mindestens zwei vorgesehen. Da diese beiden Strukturelemente unterschiedliche Laufrichtungen aufweisen, wird durch sie auch die Torsionssteifigkeit der Leichtbaustruktur deutlich erhöht. An dieser Stelle ist klarzustellen, dass die hier verwendete Definition eines "längs der Haupterstreckungsrichtung des Trägers verlaufenden Strukturelements" nicht bedeutet, dass das Strukturelement exakt in der Haupterstreckungsrichtung des Trägers verläuft, sondern nur seine wesentliche Erstreckung in dieser Haupterstreckungsrichtung aufweist. Es kann also ohne weiteres unter einem kleinen Winkel zu der Haupterstreckungsrichtung des Trägers verlaufen. Auf diese Weise sind auch bei mehreren längs der Haupterstreckungsrichtung des Trägers verlaufenden Strukturelementen unterschiedliche Laufrichtungen möglich. Ebenso kann die Laufrichtung der längs der Haupterstreckungsrichtung des Trägers verlaufenden Strukturelemente in gewissem Umfang auch an einen nicht gradlinigen Verlauf der Außenhaut angepasst sein, soweit dies nicht zu einer Gefahr des Ausknickens der Strukturelemente führt.

Bei der neuen Leichtbaustruktur kann die Außenhaut des Trägers aus einem metallischen Werkstoff ausgebildet sein. Hierbei kann es sich um eine im Flugzeugbau üblicherweise eingesetzte Leichtmetalllegierung handeln. Es ist aber auch der Einsatz von Stahlblechen möglich, die bei herkömmlichen Flugzeugkonstruktionen aus Gewichtsgründen ausscheiden, weil die besonderen Festigkeiten von Stahlblechen bei der neuen Leichtbaustruktur stärker ausgenutzt werden. Überdies sind in Verbindung mit der neuen Leichtbaustruktur auch andere Fertigungstechniken einsetzbar, indem beispielsweise auf Kenntnisse und Erfahrungen auf dem Gebiet der Blechverarbeitung zurückgegriffen wird, die vom Kraftfahrzeugbau her vorliegen, in dem bereits umfänglich mit dünnwandigen Blechen gearbeitet wird.

Die Außenhaut des Trägers kann bei der neuen Leichtbaustruktur auch aus so genannten hochfesten Werkstoffen, wie beispielsweise einem Faserverbundwerkstoff mit in der Haupterstreckungsrichtung des Trägers verlaufenden Fasern ausgebildet sein. Die hohe Festigkeit eines solchen Werkstoffs in der Haupterstreckungsrichtung des Trägers erlaubt die Aufbringung sehr hoher Zugvorspannungen auf die Außenhaut, wodurch die Belastungsfähigkeiten des Werkstoffs in dieser Richtung ausgenutzt und in der Folge sehr hohe Stabilitäten des Trägers gegen Knicken und Beulen auch mit sehr kleinen Werkstoffmengen und entsprechend sehr niedrigen Gewichten erreicht werden.

Bezüglich der Höhe der Zugvorspannung der Außenhaut gilt bei der neuen Leichtbaustruktur die Regel, dass diese zumindest so groß ist, dass sie durch alle zu erwartenden statischen und dynamischen Belastungen des Trägers nicht auf null abgebaut wird. Vielmehr sollte zumindest so viel von der Vorspannung unter allen Umständen erhalten bleiben, dass die von dem Träger geforderte Stabilität gegen Knicken und Beulen immer vorhanden ist.

Die Vorspannung der Außenhaut wird bei der neuen Leichtbaustruktur durch mindestens eine auf ein längs der Haupterstreckungsrichtung des Trägers verlaufendes Strukturelement einwirkende Spanneinrichtung festgelegt . Dabei kann die Spanneinrichtung so ausgelegt sein, dass sie auch bei Längenänderungen der Außenhaut in Richtung der Haupterstreckungsrichtung des Trägers die gewünschte Vorspannung sicherstellt. Derartige Längenänderungen können durch thermische Einflüsse oder auch durch Dehnen des Materials der Außenhaut unter der Vorspannung auftreten.

Die Vorspannung der Außenhaut wird in unterschiedlichen Betriebszuständen des Trägers unterschiedlich groß gewählt , um die Materialbelastung der Außenhaut möglichst klein zu halten. So kann bei einem Tragflügel vor Flugmanövern mit starker Beanspruchung der Tragflügel die Vorspannung der Außenhaut gezielt erhöht werden, während sie im Reiseflug bei tiefen Temperaturen, wie sie in hohen Flughöhen auftreten und bei denen das Material der Außenhaut eher spröde ist, die Vorspannung der Außenhaut kleiner gehalten wird. Entsprechende Spanneinrichtungen können beispielsweise unter Verwendung eines hydraulischen Aktuators in Verbindung mit einem elastischen Puffer, der auch durch die Längselastizität der in der Haupterstreckungsrichtung des Trägers verlaufenden Strukturelemente bereitgestellt werden kann, realisiert werden.

Jedes längs der Haupterstreckungsrichtung des Trägers verlaufende Strukturelement kann als Rohr ausgebildet sein. Rohre weisen in Richtung ihrer Rohrachse eine hohe Drucksteifigkeit bei vergleichsweise geringer Neigung zum Ausknicken auf. Die Gefahr eines Knickens eines Rohrs kann auch bei geringer Wandstärke des Rohrs dadurch weiter reduziert werden, dass der Innenraum des Rohrs mit einem Füllmaterial, wie z. B. einem Hartschaum, ausgefüllt wird. Bei dem Füllmaterial kann es sich um eine Schraubenfeder, ein Innenrohr oder auch einen relativ leichten Hartschaum handeln, die/das/der die Wandung des Rohrs, vorzugsweise unter Aufbau einens Innendrucks, von innen radial abstützt. Die Wandung des Rohrs selbst kann beispielsweise aus einem vergleichsweise dünnen Metallblech ausgebildet sein.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Trägere zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Horizontalschnitt durch einen als neuer Träger in Schalenbauweise ausgebildeten Tragflügel eines Flugzeugs.
- **Fig. 2**: zeigt einen Vertikalschnitt durch den Tragflügel gemäß Fig. 1; und
- **Fig. 3**: zeigt einen Querschnitt durch ein sich längs der Haupterstreckungsrichtung des Tragflügels verlaufendes Strukturelement des Tragflügels gemäß den Fig. 1 und 2.

### FIGURENBESCHREIBUNG

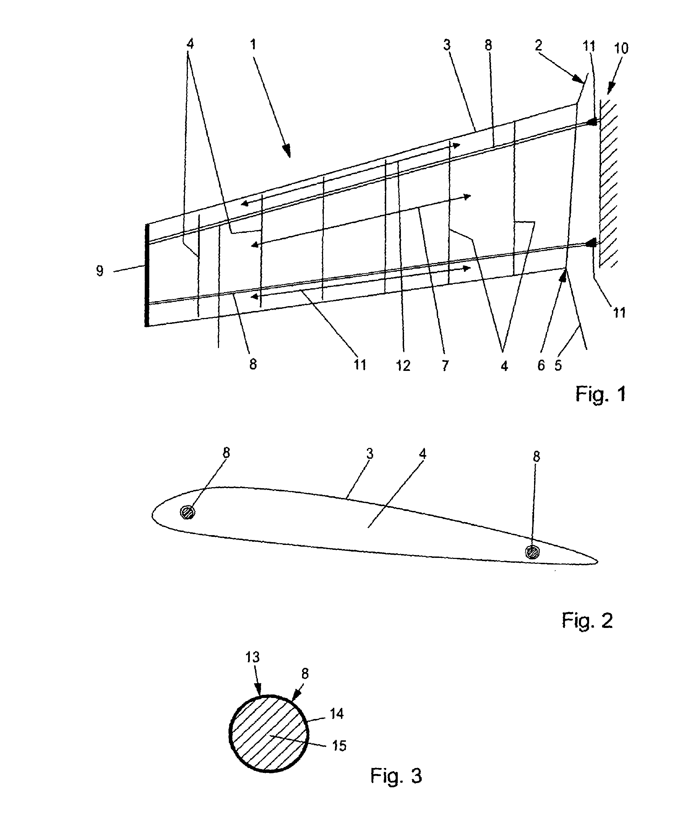

Der in den **Figuren 1** und **2** dargestellte Tragflügel eines nur unvollständig wiedergegebenen Flugzeugs 2 weist eine Außenhaut 3 auf, die durch Spanten 4, die fest mit der Außenhaut 3 verbunden sind, eine dreidimensionale Form erhält. Die Außenhaut 3 ist an einen Rumpf 5 des Flugzeugs 2 angesetzt, und zwar so, dass ihr Anschluss 6 an den Rumpf 5 in einer Haupterstreckungsrichtung 7 des Tragflügels 1 auf Zug belastbar ist. In dieser Haupterstreckungsrichtung 7 des Tragflügels 1 steht die Außenhaut 3 unter einer Zugvorspannung 12, die durch Strukturelemente 8 aufgebracht wird, welche mit leicht unterschiedlicher Laufrichtung längs der Haupterstreckungsrichtung 7 verlaufen. Die Strukturelemente 8 beaufschlagen einen Endspant 9, der fest mit der Außenhaut 3 verbunden ist, weg von einer tragenden Struktur 10 des Flugzeugs 2 innerhalb des Rumpfs 5. Dabei sind Spanneinrichtungen 11 vorgesehen, die zwischen der tragenden Struktur 10 und den Strukturelementen 8 eine definierte Druckkraft ausüben, die in eine definierte Zugvorspannung 12 der Außenhaut 3 resultiert. Mit dieser Zugvorspannung 12, die das Material der Außenhaut 3 an seine Dauerbelastungsgrenze annähert, wird die Steifigkeit der Außenhaut 3 gegenüber Knicken und Beulen extrem erhöht, so dass die gesamte Biegesteifigkeit des Tragflügels 1 zu wesentlichen Teilen auf derjenigen der vorgespannten Außenhaut 3 beruht. Natürlich tragen aber auch die Strukturelemente 8 zur Biegesteifigkeit des Tragflügels 1 bei, wie sie auch dessen Torsionssteifigkeit unterstützen. Die Spanten 4 sind auf den Strukturelementen 8 nicht ortsfest angeordnet, sondern längsverschieblich auf diesen geführt, wie dies in **Fig. 2** angedeutet ist. Statt zwei Strukturelementen 8 kann auch eine größere Anzahl solcher Strukturelemente 8 vorgesehen sein, die dann jeweils dünner und leichter ausgeführt sein können. Es ist dabei auch möglich, jeweils zwei Strukturelementen 8 übereinander anzuordnen und diese in Querrichtung starr miteinander zu verbinden, um die Biegesteifigkeit des Tragflügels 1 aufgrund der Strukturelemente 8 zu erhöhen.

**Fig. 3** zeigt einen Querschnitt durch ein Beispiel für ein Strukturelement 8. Hierbei handelt es sich um ein Rohr 13 aus dünnem Blech 14, dessen Inneres mit einem Hartschaum 15, der sich mit Druck an das Blech 14 anlegt, ausgeschäumt ist.

Obwohl ein Tragflügel 1, der als erfindungsgemäßer Träger in Schalenbauweise ausgebildet ist, ohne Stringer, d.h. ohne die Außenhaut in der Haupterstreckungsrichtung 7 direkt aussteifende Strukturelemente auskommen kann, steht es der Verwirklichung der Erfindung nicht entgegen, wenn beispielsweise zur Unterdrückung eines aerodynamisch angeregten Flatterns der Außenhaut ein oder mehrere Stringer die Außenhaut lokal verstärken.

### BEZUGSZEICHENLISTE

- 1: Tragflügel
- 2: Flugzeug
- 3: Außenhaut
- 4: Spant
- 5: Rumpf
- 6: Anschluss
- 7: Haupterstreckungsrichtung
- 8: Strukturelement
- 9: Endspant
- 10: tragende Struktur
- 11: Spanneinrichtung
- 12: Zugvorspannung
- 13: Rohr
- 14: Blech
- 15: Hartschaum

## Patentansprüche

1. Träger in Schalenbauweise mit einer Außenhaut (3) und dem Querschnitt der Außenhaut (3) senkrecht zu einer Haupterstreckungsrichtung (7) des Trägers aussteifenden und in der Haupterstreckungsrichtung (7) des Trägers voneinander beabstandeten Spanten (4, 9) sowie mit mindestens zwei im Wesentlichen längs der Haupterstreckungsrichtung (7) des Trägers verlaufenden Strukturelementen (8), wobei die Außenhaut (3) längs der Haupterstreckungsrichtung (7) des Trägers unter einer Zugvorspannung (12) steht, wobei alle Spanten (4, 9) fest mit der Außenhaut (3) verbunden sind und wobei die Spanten (4) bis auf einen Endspant (9) auf allen im Wesentlichen längs der Haupterstreckungsrichtung (7) des Trägers verlaufenden Strukturelementen (8) längsverschieblich geführt sind, **dadurch gekennzeichnet, dass** der Träger einen Tragflügel (1) eines Flugzeugs (2) ausbildet, wobei die im Wesentlichen längs der Haupterstreckungsrichtung (7) des Trägers verlaufenden Strukturelemente (8) die Zugvorspannung (12) über den fest mit der Außenhaut (3) verbundenen Endspant (9) auf die Außenhaut (3) übertragen und abstützen, wobei Strukturelemente (8) an demselben Endspant (9) angreifen und jeweils einen kleinen Winkel zu der Haupterstreckungsrichtung (7) des Trägers aufweisen, so dass sie unterschiedliche Laufrichtungen aufweisen, und wobei Spanneinrichtungen (11) vorgesehen sind, die zwischen einer tragenden Struktur (10) des Flugzeugs und den Strukturelementen (8) eine definierte Druckkraft ausüben, die in die Zugvorspannung (12) der Außenhaut (3) resultiert, um in unterschiedlichen Betriebszuständen des Flugzeugs (2) die Zugvorspannung (12) der Außenhaut (3) unterschiedlich einzustellen.

2. Träger nach Anspruch 1, **dadurch gekennzeichnet, dass** die Außenhaut (3) aus einem Faserverbundwerkstoff mit in der Haupterstreckungsrichtung (7) des Trägers verlaufenden Fasern ausgebildet ist.

3. Träger nach einem der Ansprüche 1 und 2, **dadurch gekennzeichnet, dass** jedes im Wesentlichen längs der Haupterstreckungsrichtung (7) des Trägers verlaufende Strukturelement (8) als Rohr (13) ausgebildet ist.

4. Träger nach Anspruch 3, **dadurch gekennzeichnet, dass** der Innenraum des Rohrs (13) mit einem Füllmaterial, insbesondere einem Hartschaum (15), ausgefüllt ist.

## Claims

1. Carrier of shell construction, comprising an outer skin (3) and ribs (4, 9) which strut the cross section of the outer skin (3) perpendicularly to a direction (7) of main extension of the carrier and which are arranged at a distance from each other in the direction (7) of main extension of the carrier, as well as at least two structural elements (8) which essentially run along the direction (7) of main extension of the carrier, wherein the outer skin (3) is under a tensile pre-loading (12) along the direction (7) of main extension of the carrier, wherein all ribs (4, 9) are rigidly connected to the outer skin (3) and wherein the ribs (4), except of an end rib (9), are guided on all structural elements (8) essentially running along the direction (7) of main extension of the carrier in a longitudinally movable way, **characterized in that** the carrier forms an airfoil wing (1) of an airplane (2), wherein the structural elements (8) essentially running along the direction (7) of main extension of the carrier transfer and support the tensile pre-loading (12) onto the outer skin (3) via the end rib (9) rigidly connected to the outer skin (3), wherein structural elements (8) engage the same end rib (9) and each have a small angle with regard to the direction (7) of main extension of the carrier so that they have different running directions, and wherein loading devices (11) are provided which exert a defined pressure force between a supporting structure (10) of the airplane and the structural elements (8), which results in the tensile pre-loading (12) of the outer skin (3), to adjust the tensile pre-loading (12) of the outer skin (3) differently in different operation conditions of the airplane (2).

2. Carrier according to claim 1, **characterized in that** the outer skin (3) is made of a fibre composite material having fibres running in the direction (7) of main extension of the carrier.

3. Carrier according to any of the claims 1 and 2, **characterized in that** each structural element (8) essentially running along the direction (7) of main extension of the carrier is made as a tube (13).

4. Carrier according to claim 3, **characterized in that** the inner volume of the tube (13) is filled with a filling material, particularly with a rigid foam (15).

## Revendications

1. Poutre monocoque avec un revêtement extérieur (3) et des nervures (4, 9), renforçant le revêtement (3) perpendiculairement à une direction principale d'extension (7) de la poutre et espacées entre elles dans la direction principale d'extension (7) de la poutre ainsi qu'avec au moins deux éléments de structure (8) s'étendant essentiellement le long de la direction principale d'extension (7) de la poutre, le revêtement extérieur (3) étant soumis à une précontrainte en tension (12) le long de la direction principale d'extension (7) de la poutre, toutes les nervures (4, 9) étant fixées au revêtement (3) et les nervures (4), y-compris le saumon (9), étant guidées en translation longitudinale sur tous les éléments de structure (8) qui s'étendent essentiellement le long de la direction principale d'extension (7) de la poutre **caractérisée en ce que** la poutre forme une aile (1) d'un avion (2), les éléments de structure (8) s'étendant essentiellement le long de la direction principale d'extension (7) de la poutre, transmettant la précontrainte en tension (12) au moyen du saumon (9), fixé au revêtement extérieur (3), audit revêtement extérieur (3) et l'y appuyant, des éléments de structure (8) retenant ledit saumon (9) et faisant chacun un petit angle avec la direction principale d'extension (7) de la poutre de sorte qu'ils présentent des directions de déplacement différentes et **en ce que** des élément de tension (11) sont prévus qui exercent une force de pression définie entre une structure portante (10) de l'avion et les éléments de structure (8), qui résulte en la précontrainte en tension (12) du revêtement extérieur (3) pour adapter différentes précontraintes en tension (12) à différentes configurations de vol de l'avion.

2. Poutre selon la revendication 1, **caractérisée en ce que** le revêtement extérieur (3) est fabriqué en un matériau composite renforcé aux fibres dont les fibres s'étendent dans la direction principale d'extension (7) de la poutre.

3. Poutre selon l'une des revendications 1 et 2, **caractérisée en ce que** chaque élément de structure (8) s'étendant essentiellement le long de la direction principale d'extension (7) de la poutre est formé par un tube (13).

4. Poutre selon la revendication 3, **caractérisée en ce que** l'espace intérieur du tube (13) est rempli d'un matériau de remplissage, notamment une mousse dure (15).
